# EUROPEAN PATENT SPECIFICATION

(11) **EP 1 918 826 B1**
(45) Date of publication and mention of the grant of the patent: **15.02.2012**
(21) Application number: 06123154.4
(22) Date of filing: 30.10.2006
(51) Int. Cl.: G06F 17/30, H04L 29/08, H04L 29/06, H04W 28/06

(54) **Method and apparatus for web browser page fragmentation**
Verfahren und Vorrichtung zur Web-Browser-Seitenfragmentierung
Procédé et appareil de fragmentation de page de navigateur Web

(43) Date of publication of application: 07.05.2008
(73) Proprietor: RESEARCH IN MOTION LIMITED, Waterloo, Ontario N2L 3W8 (CA)
(72) Inventor: Vitanov, Kamen B., Mississauga, Ontario L5M 6E8 (CA); Stoev, Orlin, Toronto Ontario M8V 4B4 (CA)
(74) Representative: Moore, Barry

(56) References cited:
- EP-A2- 1 542 140
- WO-A-2004/001625
- US-A1- 2003 069 881
- US-A1- 2005 131 911
- WONG E Y C ET AL: "Semantic-based approach to streaming xml contents using xstream" PROCEEDINGS OF THE 27TH. ANNUAL INTERNATIONAL COMPUTER SOFTWARE AND APPLICATIONS CONFERENCE. COMPSAC 2003. DALLAS, TX, NOV. 3 - 6, 2003, ANNUAL INTERNATIONAL COMPUTER SOFTWARE AND APPLICATIONS CONFERENCE, LOS ALAMITOS, CA, IEEE COMP. SOC, US, vol. CONF. 26, 3 November 2003 (2003-11-03), pages 91-96, XP010669079 ISBN: 0-7695-2020-0
- DATTA A ET AL: "A proxy-based approach for dynamic content acceleration on the WWW", PROCEEDINGS FOURTH IEEE INTERNATIONAL WORKSHOP ON ADVANCED ISSUES OF E-COMMERCE AND WEB-BASED INFORMATION SYSTEMS (WECWIS 2002), 26 June 2002 (2002-06-26), - 28 June 2002 (2002-06-28), pages 159-164, XP010595220, Newport Beach, CA, USA

## Description

The present application relates generally to enhanced web browsing, and in particular, to a method and system for enhanced web browsing for mobile devices.

Mobile devices are becoming increasingly sophisticated. In addition to providing voice communication capabilities, devices are increasingly being used for data communications. This includes electronic mail messages but also includes browsing networks such as the Internet.

A mobile device will generally communicate wirelessly through a radio frequency communication channel. Various standards for radio frequency communications are known to those in the art. Browsing the Internet over mobile devices is problematic for a number of reasons. The connection speed between the mobile device and the wireless network is relatively slow, and the loading and updating time for web pages is considerably slower with mobile devices compared to conventional browsing on a personal computer. Additionally, bandwidth is expensive and limitations exist in many cases for the total download size of files over the air. Due to the nature of mobile wireless coverage, connectivity is not as reliable as in conventional wire line networks. When a connection is lost in the middle of loading of a web page, the whole page needs to be requested and reloaded once the connection is restored.

Solutions to optimize web page loading from mobile devices have been previously introduced. For example, compression techniques are used to minimize the amount of data being sent over the air in order to optimize bandwidth usage and increase transfer speed. Reliable protocols guarantee that data can be delivered over unreliable networks. While these solutions provide some enhancements, further enhancements are required. US-A-2005/0131911 relates to the presentation of multimodal web page content on sequential multimode devices. Here a sequential multimode server converts a multimodal web page into, for example, a voice-only fragment and a GUI fragment. Only the fragments requested by a mobile device are then transmitted to it.

### GENERAL

The present system and method seeks to enhance a browsing experience for a mobile device user through the introduction of a wireless page fragmentation server proxy (WPFS proxy). All data pass between a mobile device and the Internet for web browsing will flow through the WPFS proxy.

The WPFS proxy may be designed to fragment a web page and assign unique identifiers to the fragments. A first approach outlined below is a design time approach in which various tags can be added to a web page to indicate to the WPFS proxy how the web page should be broken down. A designer of a web page can rank various fragments of the web page to be higher priority than others, thereby allowing a mobile device to receive only fragments of a certain priority. For example, devices with a smaller screen size (form factor) may choose to render only high priority fragments.

A second approach outlined below is a run time approach in which the WPFS proxy fragments web pages that do not have special tags embedded within them. Thus, the WPFS proxy could scan a web page and identify certain HTML tags for HTML frames, frame sets, tables, forms, objects, images and scripts and enclose these various tags with tags for fragmentation. The fragmented page may then be sent to the browser on the mobile device.

The use of fragments may provide several advantages. Fragments allow the refreshing of a web page by only passing to the mobile device portions of the web page that have been updated or that are no longer stored in the mobile device's cache. This thereby decreases the amount of data that is transferred to a device. Minimizing data transfer decreases the cost for data transfer and increases the speed at which a page can get refreshed, thereby allowing the user to have a faster browsing experience at a lower cost.

Other advantages may include the ability to resend only fragments that have not yet been loaded if a connection is lost part way through a download of a web page. Further, fragments with low priority items or with certain content types can be blocked before being sent over the air. Other advantages will be apparent when considering the detailed description herein.

Both the design time approach and the run time approach can be used in conjunction with each other, and the two solutions are not mutually exclusive. A preferred embodiment allows a WPFS proxy to use both approaches to cover a wider variety of web pages.

The present disclosure therefore may provide a web page fragmentation server proxy communicating with a mobile device over wireless network and receiving from the mobile device requests for a web page along with fragment identifiers of the web page stored on the mobile device; the web page fragmentation server proxy further communicating with web servers over the Internet, said web page fragmentation server proxy comprising: communication means for communicating with the wireless network and the Internet; memory for storing web page fragments; and a processor adapted to fragment all web pages destined for said mobile device to create received fragments, said processor further adapted to compare stored web page fragments with received fragments and store received fragments that are new or updated, wherein the web page fragmentation server proxy is adapted to send stored web page fragments not already stored on the mobile device to the mobile device.

The present disclosure may further provide a method, in a web page fragmentation server proxy having a processor, communication means and memory, of providing new and updated fragments to a mobile device, the mobile device requesting a web page with the request including identifiers for fragments of the web page already stored by the mobile device, the method comprising the steps of: receiving a web page from the internet corresponding with the web page requested by the mobile device;
fragmenting the received web page, creating received fragments; comparing received fragments with fragments stored in the memory, the fragments not matching the memory being new fragments; storing new fragments; and passing new fragments to the mobile device.

The present disclosure may further provide a method of browsing on a mobile device comprising the steps of: sending, from the mobile device, a web page request with fragment identifiers of fragments stored on the mobile device to a web page fragmentation server proxy, receiving any new or updated fragments from the web page fragmentation server proxy with different fragment identifiers to those stored on the mobile device to the mobile device, and refreshing the web page display on the mobile device based on both returned fragments and stored fragments.

The present disclosure may further provide a system for providing enhanced web browsing to a user of a mobile device, comprising: a wireless network; the mobile device, said mobile device communicating with the wireless network; and a web page fragmentation server proxy communicating with said wireless network and further communicating with web servers over the internet, said web page fragmentation server proxy processing all web traffic to and from said mobile device, said web page fragmentation server having: memory for storing web pages fragments; and a processor adapted to fragment web pages received from said web servers, the processor further adapted to compare stored web page fragments with web page fragments generated by the processor, wherein the mobile device has a browser adapted to receive fragments of web pages and to request web pages utilizing fragment identifiers, said web page fragmentation server proxy being adapted to send web page fragments not already stored on the mobile device to the mobile device.

### BRIEF DESCRIPTION OF THE DRAWINGS

The present disclosure will be better understood with reference to the drawings in which:
Figure 1 is a block diagram of a mobile device within a wireless network;
Figure 2 is a data flow diagram showing a request from a mobile station to receive the contents of the web page;
Figure 3 is a flow chart showing a method of operation of a WPFS proxy in accordance with the present disclosure;
Figure 4 is a simplified block diagram of a WPFS proxy; and
Figure 5 is a block diagram of an exemplary mobile device that can be used in accordance with the present method and system.

### DESCRIPTION OF PREFFERRED EMBODIMENTS

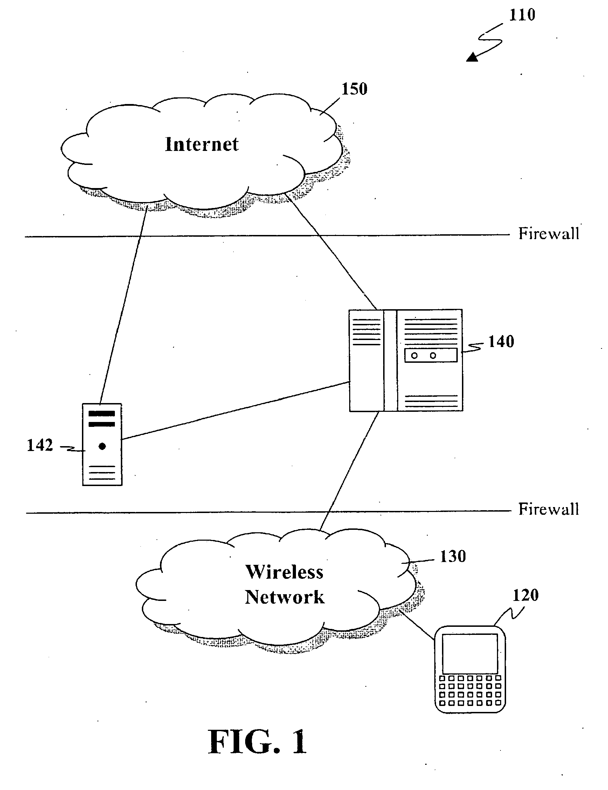

Reference is now made to Figure 1. Figure 1 is a block diagram of an exemplary system 110 for use with the method for web browser page fragmentation. System 110 includes a mobile device 120, which may be any type of wireless mobile electronic communications device, such as a cell phone, a smart phone, a personal data assistant (PDA), a pager, a handheld computer or a phone enabled laptop computer, among others. As will be appreciated by those skilled in the art, system 110 will include multiple mobile devices 120 and illustration of one mobile device 120 in Figure 1 is merely meant as a simplification. Further, the above list of possible mobile devices is not meant to be limiting. Mobile device 120 can be any type of mobile device that can communicate through a wireless network.

Each mobile device 120 may be provided with various applications, including, without limitation, one or more existing applications that enable communications with other mobile devices 120, such as wireless telephone applications, e-mail applications, short message service (SMS) applications, multi-media messaging service (MMS) applications among others. Further, each mobile device 120 is also provided with software that enables browsing of the Internet, such browsing applications being known in the art. The term "application" as used herein shall include one or more programs, routines, subroutines, function calls or other type of software or firmware and the like, alone or in combination.

System 110 also includes a wireless network 130 with which mobile device 120 communicates. Wireless network 130 may be any wireless communication network or combination of interconnected networks, including, without limitation, Mobitex^{™}, DataTAC^{™}, TDMA, CDMA/1xRTT/EVDO, GSM/GPRS/EDGE/UMTS, PCS, EMTS or CDPD. As is known, wireless network 130 includes a plurality of base stations that perform radio frequency protocols to support data and voice exchanges with mobile device 120. A network node 140 communicates with wireless network 130 and controls communication to and from mobile device 120.

A wireless page fragmentation server (WPFS) proxy can exist as part of network node 140 or as a separate server 142 as illustrated in Figure 1. In either situation, the WPFS or WPFS proxy acts in a similar manner and for consistency and simplicity below, the two will be interchangeable and will be referred to as "WPFS proxy 142".

WPFS proxy 142 performs several functions in order to enhance browsing from mobile device 120. WPFS proxy 142 acts as an intermediary between Internet 150 and a browser on mobile device 120. All web traffic going to mobile device 120 is routed through WPFS proxy 142 and all requests for web pages from mobile device 120 flow through WPFS proxy 142.

WPFS proxy 142 receives web pages requested by mobile device 120. In order to benefit from the present method, WPFS proxy 142 then preferably fragments the web page that was received. As will be appreciated, this can be done in one of several ways.

In a first embodiment, if a designer has designed his or her web page to be mobile device friendly, special tags could be inserted into the web page that are recognizable by the WPFS proxy and by an adapted browser on mobile device 120.

Specifically, web pages are written in various languages including hypertext mark-up language (HTML) or extensible hypertext mark-up language (XHTML). Other languages for web pages would be known to those skilled in the art and the present application is not meant to be limited to HTML or XHTML.

In the HTML example, the structure of the HTML code may be as follows:

```
     <HTML>
             <BODY>
                    <TABLE>
                           <TR>
                                  <TD>
                                  .....
                                  </TD>
                           </TR>
                           <TR>
                                  <TD>
                                  .....
                                  </TD>
                           </TR> </TD>
                           </TR>
                    </TABLE>
             </BODY>
     </HTML>
```

A design time option for a designer who is targeting mobile users could be to include a new tag within the HTML or XHTML tags that will be used to identify fragments within the page and further to set priority and a unique identifier for each fragment. An exemplary modified HTML code would be as follows:

```
     <HTML>
             <BODY>
                    <TABLE>
                           <FR ID=1 PRIORITY=1 VERSION=1.0>
                                  <TR>
                                          <TD>
                                               .....
                                          </TD>
                                  </TR>
                           </FR>
                           <FR ID=2 PRIORITY=3 VERSION=1.5>
                                  <TR>
                                          <TD>
                                               .....
                                          </TD>
                                  </TR>
                           </FR>
                    </TABLE>
             </BODY>
     </HTML>
```

The new tag has been designated as "FR" to indicate a fragment. This is, however, not limiting, and the name of the fragment tag can be any combination of letters or numbers.

In the preferred embodiment, the fragment tag includes several parameters. The first is the identifier for the fragment. Each fragment within a web page needs to have a unique identifier. The reason for this is for the updating of web pages or the loading of web pages on a fragment-by-fragment basis as described in more detail below. Thus, the WPFS proxy 142 will store a unique identifier. In one example, the unique identifier comprises the name of the web page (URI or URL - uniform resource identifier or uniform resource locator) along with the fragment identification. Other unique identifiers are possible.

The second parameter identified above for the fragment tag includes the priority. A designer could assign various priorities to various fragments. For example, if the user is accessing a site that gives stock quotes, the actual stock symbol and stock price could be in a fragment that has a very high priority, whereas background material and perhaps advertising on the page could be given a lower priority.

A further parameter for the fragment tag above is the version number of the fragment. As will be appreciated by those skilled in the art, a web page that periodically updates could assign a subsequent version number to each fragment that is being updated. Only the fragments that have been updated can then be downloaded to mobile device 120 in order to save the bandwidth and costs of downloading the entire web page. For example, in the stock quote web page, a stock symbol and a price could be given a first version number. When the stock price changes, then the fragment with that stock price in it could be given a subsequent version number.

The above fragment tag and the exemplary parameters that are associated therewith is meant to be illustrative of a preferred fragment tag but is not meant to be limiting. Other parameters could be added to the fragment tag and further the parameters identified above, including the unique identifier, priority value and the version number could be omitted in some cases. For example, the identifier could be omitted completely and the WPFS proxy 142 could assign its own identifiers to the fragments based on the order that they appear within the web page source code. Alternatively, a fragment identifier could include both the unique identifier and version number together.

When WPFS proxy 142 receives a web page designed with fragments in it, it can break the web page into the fragments as designed by the web page designer and pass these fragments to the mobile device in accordance with the mobile device's preferences. For example, the mobile device may indicate that only fragments with the priority higher than a value X are to be passed to the mobile device. Such a request could be made if, for example, the device has a smaller form factor or operates on slower networks.

WPFS proxy 142 further receives web pages that are requested by mobile devices 120 that were not designed for fragmentation as described above. In this case, WPFS proxy 142 can render the web page on the fly and fragment it. In a preferred embodiment, WPFS proxy 142 scans the web page and identifies tags within the web page that may be useful for fragmentation. Such tags include, but are not limited to, frames, frame sets, tables, forms, objects, images and scripts. WPFS proxy 142 embeds fragmention tags into the page based on these tags and forwards the fragmented page to the browser on mobile device 120 on a fragment-by-fragment basis. As with the above, each fragment is assigned a unique identifier, which can then be used by WPFS proxy 142 to refresh the specific fragment when it needs updating.

Further, a priority may be assigned to the fragments based on the HTML tag linked to the fragment. Thus, for example, text could be assigned a higher priority for a mobile device than images. Such preferences can be universal or can be set on a device-by-device basis.

For a device specific embodiment, a device profile from mobile device 120 could be sent to WPFS proxy 142, for example, during registration of the mobile device, which would indicate the profile of the device. The device can specify whether it wants to receive images, tables, text or some combination of these, among others. It is possible that a user of mobile device 120 could set these parameters or the parameters could be pre-configured based on the type of mobile device 120 that is browsing the Internet.

In an alternative embodiment, a content type field could be added to the fragmentation tag. Specifically, instead of or in addition to using a priority to specify which types of content the mobile device 120 should receive, a content type tag could be added to the fragment. In this case, the mobile device could specify that it wants to receive a certain content type rather than fragments above a preset priority threshold.

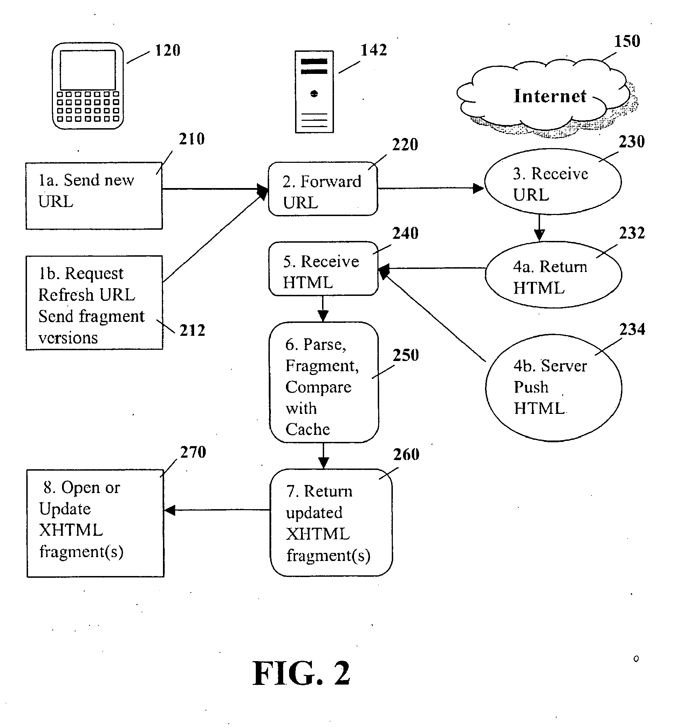

In a preferred embodiment, regardless of whether the fragmentation is done by a web page designer or WPFS proxy 142, WPFS proxy keeps a copy of the last page sent to the browser on mobile device 120 and either adds a version number or utilizes the passed version number, along with the unique identifier when storing the fragment. Thereafter, and as described in more detail below with reference to Figure 2, when a refresh of the page is requested by a user or pushed from a server, WPFS proxy 142 fragments the updated page and compares the two versions of the page, i.e. the one received and the one stored, fragment-by-fragment. Only the fragments that have been changed need to be passed to the browser on mobile device 120.

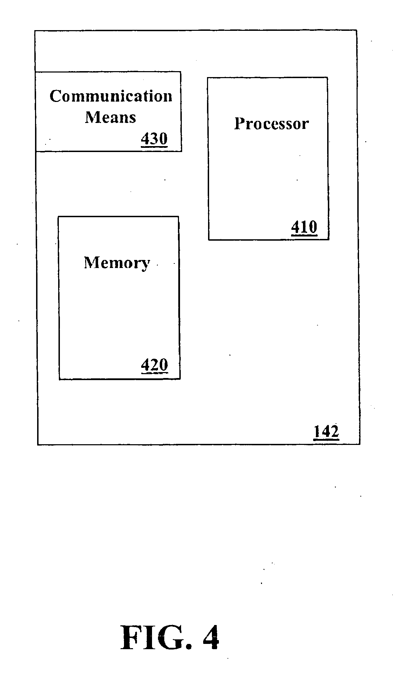

Reference is now made to Figure 4. Figure 4 illustrates a simplified WPFS proxy 142. WPFS proxy 142 of Figure 4 can be a separate element or part of another server, as described above. In the case of a shared server, the elements shown in Figure 4 could be common or used by other parts of the server.

WPFS proxy 142 includes at least a processor 410 and memory 420. Communication means 430 allow communication with both the wireless network 130 and Internet 150 as illustrated in Figure 1. Processor 410 is adapted to both fragment web pages in accordance with the above, and also to perform a comparison between fragments received and fragments stored in memory 420. This comparison could involve merely checking version numbers if the fragments were created by a designer and each fragment is assigned a unique version number when the fragment changes. Alternatively, if the WPFS Proxy 142 is fragmenting the web page, then the comparison could involve comparing the actual content of each fragment to see whether a change has been made, and if so, assigning a unique version number to the fragment at WPFS proxy 142.

Various other components could exist on WPFS proxy 142 and the diagram of Figure 4 is not meant to limit the addition of other components.

As will be appreciated, a browser on mobile device 120 will also need to be updated in order to support the fragmentation of web pages. This can be done either through a plug-in module with existing browsers or with a redesigned browser. The updated browser needs to recognize that fragments exist, and thus when requesting a web page it will know to go to the memory of mobile device 120 to see whether any of the fragments of the page being requested are cached. A request from the modified browser could include fragment identifiers containing unique identifiers and version numbers of any fragments stored for the desired URL.

In a preferred embodiment, the fragment version would be included in the request header for any web page request. As will be appreciated, the request headers are part of the HTTP standard and are commonly used for communicating request parameters to a server proxy. Thus the request header could include the unique identifiers and version numbers for fragments stored on the mobile device.

The above fragment request is only an example, and other request structures and semantics are foreseen.

Reference is now made to Figure 2. Figure 2 shows an exemplary data flow diagram of the operation of the present system and method. Similar numbering to that in Figure 1 will be used with reference to the components in Figure 2.

A mobile device 120 in step 210 generates a request for a web page at a new URL. As will be appreciated, this is likely the result of a user browsing to a web page and requesting the web page. In accordance with the above, the browser in mobile device 120 sends the new URL to WPFS proxy 142.

In a preferred embodiment, step 210 includes the modification of a traditional URL request to include any fragment identifiers (containing unique identifiers and versions) of the requested web page for fragments that are stored within the memory of mobile device 120. Specifically, if the user has previously requested the URL and subsequently gone to a different page, the web page may still be stored in the mobile device's cache. In this case, the mobile device will only be interested in an update of the web page and can therefore include, with the URL, the fragment identifiers that are stored within the memory of mobile device 120 when it sends the URL to WPFS proxy 142.

Alternatively, in step 212, the browser may request a refresh of the URL. In certain situations, the user may stay on a web page in order to receive specific information that it wants updated periodically. For example, if the mobile user is on a stock market page, the user may request that a stock price be updated every three minutes. This can be done either through pushing from the content provider or a pull request from the browser on mobile device 120. Step 212 illustrates the latter in which a pull request is being made.

In one embodiment, a browser could allow a JavaScript subscription to a fragment within a page. Thus, the user could identify which fragments he or she wanted updated and then ignore the remainder of the web page or maintain the web pages already stored in cache with the exception of the one or more fragments that are being updated, according to the JavaScript subscription.

Step 212 could also be the case where a user hits a refresh button on a web page.

The URLs and fragment identifiers from steps 210 and 212 are sent to WPFS proxy 142. In step 220, WPFS proxy 142 forwards the URL to the Internet 150 and ultimately to the server for the web page being requested. In some embodiments, WPFS proxy 142 also forwards fragment identifiers in addition to the URL.

The server on Internet 150 receives the URL in step 230 and returns HTML (or XHTML, etc.) code in step 232.

WPFS proxy 142 receives the HTML code, sent in step 232, in step 240 and in step 250 proceeds to parse fragments and compare the content with the cached content on WPFS proxy 142. In addition, the fragments are also compared with the fragments identified in the page request sent from device 120 in step 210.

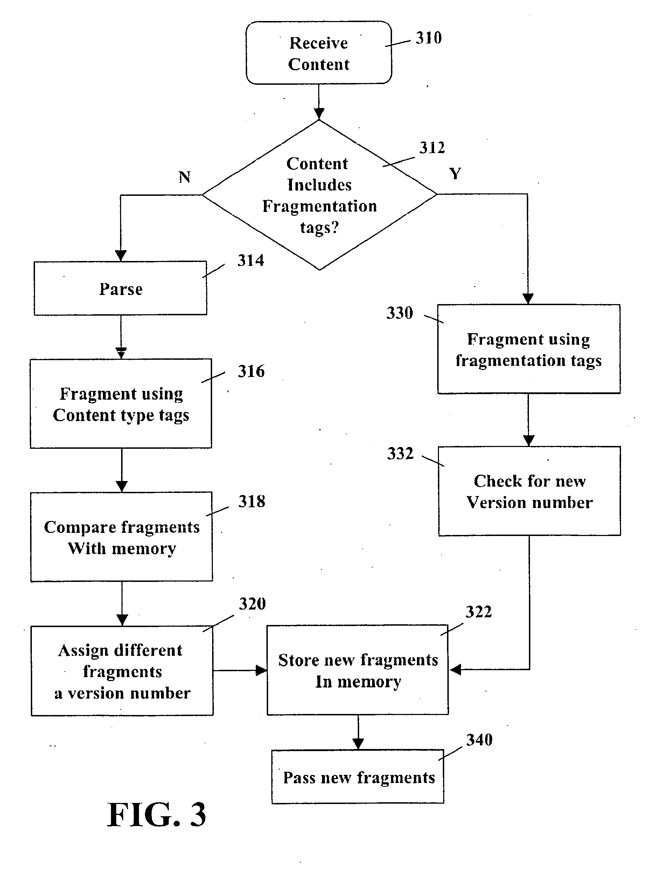

Step 250 is described in more detail with reference to Figure 3 and, in particular, the parsing and fragmenting of the page can occur based on either embedded tags for fragmentations that were provided by a designer or based on tags in a pre-determined fragmentation algorithm for web pages that are not specifically designed to be fragmented.

A comparison with the cache on WPFS proxy 142, or with the fragment identifiers sent in step 210 is performed to check whether the version that is stored on mobile device 120 is the same as the fragment that WPFS proxy 142 has received.

In step 260, WPFS proxy 142 returns updated fragments that are different from those already stored within mobile device 120. In some embodiments, only some of the updated fragments may be returned to device 120, based on the fragments that were requested to be updated as part of the page request in step 210. These fragments are then passed over the air through wireless network 130 to the browser on mobile device 120.

In step 270, the mobile device opens or updates the fragment that has been received from the WPFS proxy 142.

In one embodiment, a content provider on Internet 150 could push content to the mobile device 120. In this case, a push server could generate a message in step 234, which could be then passed to WPFS proxy 142 and received in step 240. The pushed content will be treated as if the content that has been received from step 232 and will thus proceed through steps 250, 260 and 270.

Reference is now made to Figure 3. Figure 3 shows a flow chart of an exemplary method for WPFS proxy 142 when receiving web pages prior to forwarding them to mobile device 120.

In step 310, WPFS proxy 142 receives content. Such content is either an entire web page or a fragment of a web page - for example if a web server is pushing fragments individually.

The process in WPFS proxy 142 proceeds to step 312 in which it checks to see whether the received content includes fragmentation tags. As described above, a designer may insert fragmentation tags to indicate where a page should be fragmented, and further assign a priority to each fragment. In step 312, the process on WPFS proxy 142 checks whether or not such tags exist within the message.

If not, the process proceeds to step 314 in which the content is parsed. In other words, the content is analyzed for its particular contents.

The process next proceeds to step 316 in which the content is fragmented using content type tags. As indicated above, such tags include, but are not limited to, tags representing frames, frame sets, tables, forms, objects, images and scripts. Each of these content types can be broken into a separate frame, given a unique frame identifier for the URL and further given a priority or a content type parameter to facilitate the passing of the information.

From step 316, the process proceeds to step 318 in which each fragment created in step 316 is compared with any fragments that exist within the cache of WPFS proxy 142. This is done in order to see whether changes exist within the content received with the content cached.

In a preferred embodiment, step 318 will discard fragments that are identical to those that are already stored on WPFS proxy 142. Those fragments that are different are assigned a unique version number in step 320 and are stored in WPFS proxy 142 in step 322.

If, in step 312, the WPFS proxy 142 finds that fragmentation tags are included within the content, then the process proceeds to step 330. In step 330, the WPFS proxy 142 fragments the content using the fragmentation tags provided by a developer.

The process next proceeds to step 332 in which the fragments are checked for their version number. If the version number of the fragments is the same as the version number of fragments that are already stored on WPFS proxy 142, in a preferred embodiment such fragments are discarded. The fragments that contain new version numbers are preferably stored in step 322.

The process next proceeds from step 322 to step 340. In step 340, the fragment identifiers containing the unique identifiers and version numbers for the URL requested by mobile device 120 are compared with the unique identifiers and version numbers of the content received from Internet 150. Any new content meeting the predefined criteria for mobile device 120 is passed in step 340 to mobile device 120. As will be appreciated by those skilled in the art, new content as referred to herein means fragments not already stored on mobile device 120 which can include updated fragments. The determination of whether the fragment is already stored on the mobile device is done based first on the unique identifier and second on the version number of the fragment.

The above allows for several scenarios. Specifically, a first scenario is when a user requests a page update or a server pushes an update. The browser could send to the WPFS proxy 142 a version for each fragment that is stored on mobile device 120 and the WPFS proxy 142 will send back only the fragments that need to be updated, if any. This provides the advantage that not all content needs to be passed over the air, saving both network resources and battery life, and providing the user with cost savings, since in many cases the costs for browsing are related to the number of bytes downloaded.

In a further scenario, if the mobile device is in the middle of opening a new page when a data connection to the wireless network 130 is lost, when the data connection is re-established only fragments that were not previously loaded need to be sent. This is contrasted with the prior art in which the entire page would have to be resent.

In a further scenario, the browsing of a mobile device can be customized for particular content type based on the fragments that are desired by the user. The WPFS proxy can strip off low priority fragments or specific content type selectively based on the device type, device screen size or user preferences, among others.

As will further be appreciated, updates to the web page will be faster since only a portion of the web page may need to be passed. This allows content that is already stored on the mobile device to be shown to the user quickly and only the portion of the page that is updated needs to be refreshed.

Other exemplary scenarios for the advantages of the fragmentation of web pages exist and the above scenarios are meant as examples only.

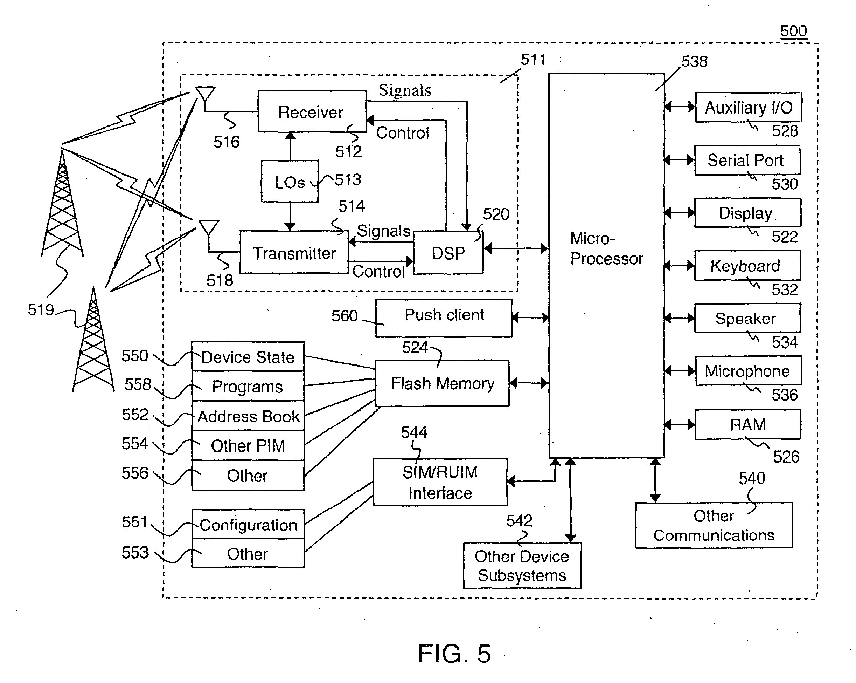

As will be appreciated, the above can be implemented on any mobile device with a browser modifier for fragments. One exemplary mobile device is described below with reference to Figure 5. This is not meant to be limiting, but is provided for illustrative purposes.

Figure 5 is a block diagram illustrating a mobile station apt to be used with preferred embodiments of the apparatus and method of the present application. Mobile station 500 is preferably a two-way wireless communication device having at least voice and data communication capabilities. Mobile station 500 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station 500 is enabled for two-way communication, it will incorporate a communication subsystem 511, including both a receiver 512 and a transmitter 514, as well as associated components such as one or more, preferably embedded or internal, antenna elements 516 and 518, local oscillators (LOs) 513, and a processing module such as a digital signal processor (DSP) 420. As will be apparent to those skilled in the field of communications, the particular design of the communication subsystem 511 will be dependent upon the communication network in which the device is intended to operate.

Network access requirements will also vary depending upon the type of network 519. In some CDMA networks network access is associated with a subscriber or user of mobile station 500. A CDMA mobile station may require a removable user identity module (RUIM) or a subscriber identity module (SIM) card in order to operate on a CDMA network. The SIM/RUIM interface 544 is normally similar to a card-slot into which a SIM/RUIM card can be inserted and ejected like a diskette or PCMCIA card. The SIM/RUIM card can have approximately 64K of memory and hold many key configuration 551, and other information 553 such as identification, and subscriber related information.

When required network registration or activation procedures have been completed, mobile station 500 may send and receive communication signals over the network 519. As illustrated in Figure 5, network 519 can consist of multiple base stations communicating with the mobile device. For example, in a hybrid CDMA 1 x EVDO system, a CDMA base station and an EVDO base station communicate with the mobile station and the mobile station is connected to both simultaneously. The EVDO and CDMA 1 x base stations use different paging slots to communicate with the mobile device.

Signals received by antenna 516 through communication network 519 are input to receiver 512, which may perform such common receiver functions as signal amplification, frequency down conversion, filtering, channel selection and the like, and in the example system shown in Figure 5, analog to digital (A/D) conversion. A/D conversion of a received signal allows more complex communication functions such as demodulation and decoding to be performed in the DSP 420. In a similar manner, signals to be transmitted are processed, including modulation and encoding for example, by DSP 520 and input to transmitter 514 for digital to analog conversion, frequency up conversion, filtering, amplification and transmission over the communication network 519 via antenna 518. DSP 520 not only processes communication signals, but also provides for receiver and transmitter control. For example, the gains applied to communication signals in receiver 512 and transmitter 514 may be adaptively controlled through automatic gain control algorithms implemented in DSP 520.

Mobile station 500 preferably includes a microprocessor 538 which controls the overall operation of the device. Communication functions, including at least data and voice communications, are performed through communication subsystem 511. Microprocessor 538 also interacts with further device subsystems such as the display 522, flash memory 524, random access memory (RAM) 526, auxiliary input/output (I/O) subsystems 528, serial port 430, two or more keyboards or keypads 532, speaker 534, microphone 536, other communication subsystem 540 such as a short-range communications subsystem and any other device subsystems generally designated as 542. Serial port 530 could include a USB port or other port known to those in the art.

Some of the subsystems shown in Figure 5 perform communication-related functions, whereas other subsystems may provide "resident" or on-device functions. Notably, some subsystems, such as keyboard 532 and display 522, for example, may be used for both communication-related functions, such as entering a text message for transmission over a communication network, and device-resident functions such as a calculator or task list.

Operating system software used by the microprocessor 538 is preferably stored in a persistent store such as flash memory 524, which may instead be a read-only memory (ROM) or similar storage element (not shown). Those skilled in the art will appreciate that the operating system, specific device applications, or parts thereof, may be temporarily loaded into a volatile memory such as RAM 526. Received communication signals may also be stored in RAM 526.

As shown, flash memory 524 can be segregated into different areas for both computer programs 558 and program data storage 550, 552, 554 and 556. These different storage types indicate that each program can allocate a portion of flash memory 524 for their own data storage requirements. Microprocessor 538, in addition to its operating system functions, preferably enables execution of software applications on the mobile station. A predetermined set of applications that control basic operations, including at least data and voice communication applications for example, will normally be installed on mobile station 500 during manufacturing. Other applications could be installed subsequently or dynamically.

A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 519. In a preferred embodiment, the PIM data items are seamlessly integrated, synchronized and updated, via the wireless network 519, with the mobile station user's corresponding data items stored or associated with a host computer system. Further applications may also be loaded onto the mobile station 500 through the network 519, an auxiliary I/O subsystem 528, serial port 530, short-range communications subsystem 540 or any other suitable subsystem 542, and installed by a user in the RAM 526 or preferably a nonvolatile store (not shown) for execution by the microprocessor 538. Such flexibility in application installation increases the functionality of the device and may provide enhanced on-device functions, communication-related functions, or both. For example, secure communication applications may enable electronic commerce functions and other such financial transactions to be performed using the mobile station 500.

In a data communication mode, a received signal such as a text message or web page download will be processed by the communication subsystem 511 and input to the microprocessor 538, which preferably further processes the received signal utilizing a modified browser for output to the display 522, or alternatively to an auxiliary I/O device 528. A push client 560 could also process the input.

A user of mobile station 500 may also compose data items such as email messages for example, using the keyboard 532, which is preferably a complete alphanumeric keyboard or telephone-type keypad, in conjunction with the display 522 and possibly an auxiliary I/O device 528. Such composed items may then be transmitted over a communication network through the communication subsystem 511.

For voice communications, overall operation of mobile station 500 is similar, except that received signals would preferably be output to a speaker 534 and signals for transmission would be generated by a microphone 536. Alternative voice or audio I/O subsystems, such as a voice message recording subsystem, may also be implemented on mobile station 500. Although voice or audio signal output is preferably accomplished primarily through the speaker 534, display 522 may also be used to provide an indication of the identity of a calling party, the duration of a voice call, or other voice call related information for example.

Serial port 530 in Figure 5 would normally be implemented in a personal digital assistant (PDA)-type mobile station for which synchronization with a user's desktop computer (not shown) may be desirable, but is an optional device component. Such a port 530 would enable a user to set preferences through an external device or software application and would extend the capabilities of mobile station 500 by providing for information or software downloads to mobile station 500 other than through a wireless communication network. The alternate download path may for example be used to load an encryption key onto the device through a direct and thus reliable and trusted connection to thereby enable secure device communication. As will be appreciated by those skilled in the art, serial port 530 can further be used to connect the mobile device to a computer to act as a modem.

Other communications subsystems 540, such as a short-range communications subsystem, is a further optional component which may provide for communication between mobile station 500 and different systems or devices, which need not necessarily be similar devices. For example, the subsystem 540 may include an infrared device and associated circuits and components or a Bluetooth^{™} communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A web page fragmentation server proxy (142) for communicating with a mobile device (120) over a wireless network and for receiving from the mobile device requests for a web page along with fragment identifiers of the web page stored on the mobile device; the web page fragmentation server proxy being adapted to communicate with web servers over the Internet, said web page fragmentation server proxy comprising:
communication means (430) for communicating with the wireless network and the Internet;
memory (420) for storing web page fragments; and
a processor (410) adapted to fragment all web pages destined for said mobile device to create received fragments, said processor further adapted to compare stored web page fragments with said received fragments and store said received fragments that are new or updated,
wherein the web page fragmentation server proxy is adapted to send stored web page fragments not already stored on the mobile device to the mobile device, as determined utilizing the fragment identifiers received from the mobile device.

2. The web page fragmentation server proxy of claim 1 wherein the processor (410) is adapted to fragment the web page based on fragmentation tags or content tags within the web page.

3. The web page fragmentation server proxy of claim 2, wherein a fragmentation tag comprises a fragment identifier.

4. The web page fragmentation server proxy of claim 3, wherein the fragment identifier comprises a unique identifier and a version number.

5. The web page fragmentation server proxy of claim 4, wherein the processor (410) is adapted to compare the unique identifiers and version numbers of received fragments with the unique identifiers and version numbers of stored fragments.

6. The web page fragmentation server proxy of claim 5, wherein the memory (420) is adapted to store received fragments where the unique identifiers and version numbers do not correspond with the stored fragments.

7. The web page fragmentation server proxy of any one of the preceding claims wherein the processor (410) is adapted to compare a unique identifier and version number received from the mobile device with the unique identifiers and version numbers of received fragments to determine fragments that the mobile device does not have, said communication means being adapted to forward fragments that the mobile device does not have.

8. The web page fragmentation server proxy of claim 2, wherein the content tags comprise any of frames, frame sets, tables, forms, objects, images and/or scripts.

9. The web page fragmentation server proxy of claim 8, wherein the processor (410) is adapted to use each content tag of the content tags to create a separate received fragment.

10. The web page fragmentation server proxy of claim 9, wherein the processor (410) is adapted to create a unique identifier for the received fragment.

11. The web page fragmentation server proxy of claim 10, wherein the processor (410) is adapted to compare content of the received fragment with content of stored web page fragments, the processor being adapted to create a new version number if the content of the received fragment does not match the content of the stored web page fragments.

12. The web page fragmentation server proxy of claim 11, wherein the memory (420) is adapted to store received fragments where the unique identifiers and version numbers do not correspond with those of the stored fragments.

13. The web page fragmentation server proxy of claim 2 and any one of claims 8 to 12 wherein the processor (410) compares a unique identifier and version number received from the mobile device with the unique identifiers and version numbers of received fragments to determine fragments the mobile device does not have, said communication means being adapted to forward fragments that the mobile device does not have.

14. A method, in a web page fragmentation server proxy (142) having a processor (410), communication means (430) and memory (420), of providing new and updated fragments to a mobile device (120), the mobile device requesting a web page with the request comprising fragment identifiers for fragments of the web page already stored by the mobile device, the method comprising the steps of:
receiving a web page from the internet corresponding with the web page requested by the mobile device;
fragmenting the received web page to create received fragments ;
comparing said received fragments with fragments stored in the memory, the fragments not matching the memory being new fragments;
storing new fragments; and
passing stored fragments for the requested web page with different fragment identifiers to those stored on the mobile device to the mobile device.

15. The method of claim 14, wherein the fragmenting step comprises looking for fragmentation tags or content tags within the received web page and fragmenting based on the fragmentation tags or content tags.

16. The method of claim 15 wherein the fragment identifiers comprise unique identifiers and version numbers, the comparing step utilizing the unique identifiers and version numbers within the fragmentation tags to compare received fragments with the identifiers for fragments.

17. The method of claim 16, further storing new fragments, wherein the storing step stores received fragments with a different unique identifier and version number from the unique identifier and version number of any stored fragments.

18. The method of claim 15, wherein the content tags comprise any of frames, frame sets, tables, forms, objects, images and/or scripts.

19. The method of claim 18, wherein each content tag is used to create a received fragment.

20. The method of claim 19, wherein the comparing step compares the content of the received fragment with the identifiers for fragments, wherein the content of received fragments not matching the content of stored fragments designates a new fragment.

21. The method of any one of claims 14 to 20 wherein the passing step further comprises the steps of filtering fragments based on a priority assigned to the fragments, wherein the passing step only passes filtered fragments.

22. The method of claim 21, wherein the priority is assigned within the web page.

23. The method of claim 21, wherein the priority is assigned based on a content tag type.

24. A method of browsing on a mobile device comprising the steps of:
sending, from the mobile device, a web page request with fragment identifiers of fragments stored on the mobile device to a web page fragmentation server proxy,
receiving any new or updated fragments from the web page fragmentation server proxy with different fragment identifiers to those stored on the mobile device to the mobile device, and
refreshing the web page display on the mobile device based on both returned fragments and stored fragments.

25. A system for providing enhanced web browsing to a user of a mobile device, comprising:
a wireless network;
the mobile device (120), said mobile device adapted to communicate with the wireless network; and
a web page fragmentation server proxy (142) for communicating with said wireless network and for communicating with web servers over the internet (150), said web page fragmentation server proxy being adapted to process all web traffic to and from said mobile device, said web page fragmentation server having:
memory (420) for storing web pages fragments; and
a processor (410) adapted to fragment web pages received from said web servers to create received web page fragments, the processor further adapted to compare stored web page fragments with said received web page fragments generated by the processor and store said received web page fragments that are new or updated,
wherein the mobile device has a browser adapted to receive fragments of web pages and to request web pages utilizing fragment identifiers, said web page fragmentation server proxy being adapted to send stored web page fragments not already stored on the mobile device to the mobile device, as determined utilizing the fragment identifiers received from the mobile device.

26. A computer readable medium comprising program code executable by a processor of a computing device or system for implementing the method of any one claims 14 to 23 or the method of claim 24.

## Patentansprüche

1. Webseite-Fragmentierungs-Server-Proxy (142) zum Kommunizieren mit einer mobilen Vorrichtung (120) über ein drahtloses Netzwerk und zum Empfangen von der mobilen Vorrichtung von Anforderungen für eine Webseite zusammen mit Fragmentidentifizierern der Webseite, die auf der mobilen Vorrichtung gespeichert sind; wobei der Webseite-Fragmentierungs-Server-Proxy ausgebildet ist zum Kommunizieren mit Webservern über das Internet, wobei der Webseite-Fragmentierungs-Server-Proxy aufweist:
Kommunikationsmittel (430) zum Kommunizieren mit dem drahtlosen Netzwerk und dem Internet;
einen Speicher (420) zum Speichern von Webseiten-Fragmenten; und
einen Prozessor (410), der ausgebildet ist zum Fragmentieren aller Webseiten, die für die mobile Vorrichtung bestimmt sind, um empfangene Fragmente zu erzeugen, wobei der Prozessor weiter ausgebildet ist zum Vergleichen gespeicherter Webseiten-Fragmente mit den empfangenen Fragmenten und zum Speichern der empfangenen Fragmente, die neu oder aktualisiert sind,
wobei der Webseite-Fragmentierungs-Server-Proxy ausgebildet ist zum Senden gespeicherter Webseiten-Fragmente, die noch nicht auf der mobilen Vorrichtung gespeichert sind, an die mobile Vorrichtung, wie bestimmt wird unter Verwendung der Fragmentidentifizierer, die von der mobilen Vorrichtung empfangen werden.

2. Webseite-Fragmentierungs-Server-Proxy gemäß Anspruch 1, wobei der Prozessor (410) ausgebildet ist zum Fragmentieren der Webseite basierend auf Fragmentierungs-Tags oder Inhalt-Tags in der Webseite.

3. Webseite-Fragmentierungs-Server-Proxy gemäß Anspruch 2, wobei ein Fragmentierungs-Tag einen Fragmentidentifizierer aufweist.

4. Webseite-Fragmentierungs-Server-Proxy gemäß Anspruch 3, wobei der Fragmentidentifizierer einen eindeutigen Identifizierer und eine Versionsnummer aufweist.

5. Webseite-Fragmentierungs-Server-Proxy gemäß Anspruch 4, wobei der Prozessor (410) ausgebildet ist zum Vergleichen der eindeutigen Identifizierer und Versionsnummern von empfangenen Fragmenten mit den eindeutigen Identifizierern und Versionsnummern von gespeicherten Fragmenten.

6. Webseite-Fragmentierungs-Server-Proxy gemäß Anspruch 5, wobei der Speicher (420) ausgebildet ist zum Speichern von empfangenen Fragmenten, wenn die eindeutigen Identifizierer und Versionsnummern nicht den gespeicherten Fragmenten entsprechen.

7. Webseite-Fragmentierungs-Server-Proxy gemäß einem der vorhergehenden Ansprüche, wobei der Prozessor (410) ausgebildet ist zum Vergleichen eines eindeutigen Identifizierers und einer Versionsnummer, empfangen von der mobilen Vorrichtung, mit den eindeutigen Identifizierern und Versionsnummern von empfangenen Fragmenten, um Fragmente zu bestimmen, die die mobile Vorrichtung nicht hat, wobei das Kommunikationsmittel ausgebildet ist zum Weiterleiten von Fragmenten, die die mobile Vorrichtung nicht hat.

8. Webseite-Fragmentierungs-Server-Proxy gemäß Anspruch 2, wobei die Inhalts-Tags eines von Rahmen, Rahmensätzen, Tabellen, Formen, Objekten, Bildern und/oder Skripten aufweisen.

9. Webseite-Fragmentierungs-Server-Proxy gemäß Anspruch 8, wobei der Prozessor (410) ausgebildet ist zum Verwenden jedes Inhalts-Tags der Inhalts-Tags, um ein getrenntes empfangenes Fragment zu erzeugen.

10. Webseite-Fragmentierungs-Server-Proxy gemäß Anspruch 9, wobei der Prozessor (410) ausgebildet ist zum Erzeugen eines eindeutigen Identifizierers für das empfangene Fragment.

11. Webseite-Fragmentierungs-Server-Proxy gemäß Anspruch 10, wobei der Prozessor (410) ausgebildet ist zum Vergleichen eines Inhalts des empfangenen Fragments mit Inhalt von gespeicherten Webseiten-Fragmenten, wobei der Prozessor ausgebildet ist zum Erzeugen einer neuen Versionsnummer, wenn der Inhalt des empfangenen Fragments nicht mit dem Inhalt der gespeicherten Webseiten-Fragmente übereinstimmt.

12. Webseite-Fragmentierungs-Server-Proxy gemäß Anspruch 11, wobei der Speicher (420) ausgebildet ist zum Speichern empfangener Fragmente, wenn die eindeutigen Identifizierer und Versionsnummern nicht denen der gespeicherten Fragmente entsprechen.

13. Webseite-Fragmentierungs-Server-Proxy gemäß Anspruch 2 und einem der Ansprüche 8 bis 12, wobei der Prozessor (410) einen eindeutigen Identifizierer und eine Versionsnummer, die von der mobilen Vorrichtung empfangen werden, mit den eindeutigen Identifizierern und Versionsnummern von empfangenen Fragmenten vergleicht, um Fragmente zu bestimmen, die die mobile Vorrichtung nicht hat, wobei das Kommunikationsmittel ausgebildet ist zum Weiterleiten von Fragmenten, die die mobile Vorrichtung nicht hat.

14. Verfahren, in einem Webseite-Fragmentierungs-Server-Proxy (142) mit einem Prozessor (410), Kommunikationsmittel (430) und einem Speicher (420), zum Liefern von neuen und aktualisierten Fragmenten an eine mobile Vorrichtung (120), wobei die mobile Vorrichtung eine Webseite anfordert, wobei die Anforderung Fragmentidentifizierer für Fragmente der Webseite aufweist, die bereits von der mobilen Vorrichtung gespeichert sind, wobei das Verfahren die Schritte aufweist:
Empfangen einer Webseite von dem Internet, die der Webseite entspricht, die von der mobilen Vorrichtung angefordert wird;
Fragmentieren der empfangenen Webseite, um empfangene Fragmente zu erzeugen;
Vergleichen der empfangenen Fragmente mit Fragmenten, die in dem Speicher gespeichert sind, wobei die Fragmente, die mit dem Speicher nicht übereinstimmen, neue Fragmente sind;
Speichern neuer Fragmente; und
Weiterleiten gespeicherter Fragmente für die angeforderte Webseite mit anderen Fragmentidentifizierern als die, die auf der mobilen Vorrichtung gespeichert sind, an die mobile Vorrichtung.

15. Verfahren gemäß Anspruch 14, wobei der Schritt des Fragmentierens aufweist ein Suchen von Fragmentierungs-Tags oder Inhalt-Tags in der empfangenen Webseite und Fragmentieren basierend auf den Fragmentierungs-Tags oder Inhalt-Tags.

16. Verfahren gemäß Anspruch 15, wobei die Fragmentidentifizierer eindeutige Identifizierer und Versionsnummern aufweisen, wobei der Schritt des Vergleichens die eindeutigen Identifizierer und Versionsnummern in den Fragmentierungs-Tags verwendet, um empfangene Fragmente mit den Identifizierern für Fragmente zu vergleichen.

17. Verfahren gemäß Anspruch 16, das weiter neue Fragmente speichert, wobei der Schritt des Speicherns empfangene Fragmente mit einem eindeutigen Identifizierer und einer Versionsnummer speichert, der/die verschieden ist von dem eindeutigen Identifizierer und der Versionsnummer von gespeicherten Fragmenten.

18. Verfahren gemäß Anspruch 15, wobei die Inhalts-Tags eines von Rahmen, Rahmensätzen, Tabellen, Formen, Objekten, Bildern und/oder Skripten aufweisen.

19. Verfahren gemäß Anspruch 18, wobei jedes Inhalts-Tags verwendet wird, um ein empfangenes Fragment zu erzeugen.

20. Verfahren gemäß Anspruch 19, wobei der Schritt des Vergleichens den Inhalt des empfangenen Fragments mit den Identifizierern für Fragmente vergleicht, wobei der Inhalt von empfangenen Fragmenten, der mit dem Inhalt von gespeicherten Fragmenten nicht übereinstimmt, ein neues Fragment bezeichnet.

21. Verfahren gemäß einem der Ansprüche 14 bis 20, wobei der Schritt des Weiterleitens weiter aufweist die Schritte eines Filterns von Fragmenten basierend auf einer Priorität, die den Fragmenten zugewiesen ist, wobei der Schritt des Weiterleitens nur gefilterte Fragmente weiterleitet.

22. Verfahren gemäß Anspruch 21, wobei die Priorität in der Webseite zugewiesen wird.

23. Verfahren gemäß Anspruch 21, wobei die Priorität basierend auf einem Typ eines Inhalts-Tags zugewiesen wird.

24. Verfahren zum Browsen auf einer mobilen Vorrichtung, das die Schritte aufweist:
Senden, von der mobilen Vorrichtung, einer Webseite-Anforderung mit Fragmentidentifizierern von Fragmenten, die auf der mobilen Vorrichtung gespeichert sind, an einen Webseite-Fragmentierungs-Server-Proxy,
Empfangen neuer oder aktualisierter Fragmente von dem Webseite-Fragmentierungs-Server-Proxy mit anderen Fragmentidentifizierern, als die, die auf der mobilen Vorrichtung gespeichert sind, an der mobilen Vorrichtung, und
Aktualisieren der Anzeige der Webseite auf der mobilen Vorrichtung basierend sowohl auf zurückgegebenen Fragmenten als auch gespeicherten Fragmenten.

25. System zum Vorsehen eines verbesserten Web-Browsens für einen Benutzer einer mobilen Vorrichtung, das aufweist:
ein drahtloses Netzwerk;
die mobile Vorrichtung (120), wobei die mobile Vorrichtung ausgebildet ist zum Kommunizieren mit dem drahtlosen Netzwerk; und
einen Webseite-Fragmentierungs-Server-Proxy (142) zum Kommunizieren mit dem drahtlosen Netzwerk und zum Kommunizieren mit Web-Servern über das Internet (150), wobei der Webseite-Fragmentierungs-Server-Proxy ausgebildet ist zum Verarbeiten des gesamten Web-Verkehrs an die und von der mobilen Vorrichtung, wobei der Webseite-Fragmentierungs-Server aufweist:
einen Speicher (420) zum Speichern von Webseiten-Fragmenten; und
einen Prozessor (410), der ausgebildet ist zum Fragmentieren von Webseiten, die von den Web-Servern empfangen werden, um empfangene Webseiten-Fragmente zu erzeugen, wobei der Prozessor weiter ausgebildet ist zum Vergleichen gespeicherter Webseiten-Fragmente mit den empfangenen Fragmenten, die von dem Prozessor erzeugt werden, und zum Speichern der empfangenen Webseiten-Fragmente, die neu oder aktualisiert sind,
wobei die mobile Vorrichtung einen Browser hat, der ausgebildet ist zum Empfangen von Fragmenten von Webseiten und zum Anfordern von Webseiten unter Verwendung von Fragmentidentifizierern, wobei der Webseite-Fragmentierungs-Server-Proxy ausgebildet ist zum Senden gespeicherter Webseiten-Fragmente, die noch nicht auf der mobilen Vorrichtung gespeichert sind, an die mobile Vorrichtung, wie bestimmt wird unter Verwendung der Fragmentidentifizierer, die von der mobilen Vorrichtung empfangen werden.

26. Computerlesbares Medium, das Programmcode aufweist, der ausführbar ist durch einen Prozessor in einer Computervorrichtung oder einem System, um das Verfahren gemäß einem der Ansprüche 14 bis 23 oder das Verfahren gemäß Anspruch 24 zu implementieren.

## Revendications

1. Serveur mandataire de fragmentation de pages web (142), destiné à communiquer avec un dispositif mobile (120) sur un réseau sans fil et à recevoir du dispositif mobile des demandes de page web avec des identificateurs de fragments de la page web, sauvegardés sur le dispositif mobile ; le serveur mandataire de fragmentation de pages web étant conçu pour communiquer avec des serveurs web sur l'internet, ledit serveur mandataire de fragmentation de pages web comprenant :
un moyen de communication (430) destiné à communiquer avec le réseau sans fil et avec l'internet ;
une mémoire (420) destinée à sauvegarder des fragments de pages web ; et
un processeur (410) conçu pour fragmenter toutes les pages web destinées audit dispositif mobile, afin de créer des fragments reçus, ledit processeur étant en outre conçu pour comparer des fragments de pages web sauvegardés avec lesdits fragments reçus et pour sauvegarder lesdits fragments reçus qui sont nouveaux ou mis à jour ;
le serveur mandataire de fragmentation de pages web étant conçu pour envoyer au dispositif mobile des fragments de pages web sauvegardés qui ne sont pas encore sauvegardés sur le dispositif mobile, en le déterminant à l'aide des identificateurs de fragments qui ont été reçus du dispositif mobile.

2. Serveur mandataire de fragmentation de pages web selon la revendication 1, dans lequel le processeur (410) est conçu pour fragmenter la page web sur la base de balises de fragmentation ou de balises de contenu se trouvant dans la page web.

3. Serveur mandataire de fragmentation de pages web selon la revendication 2, dans lequel une balise de fragmentation comprend un identificateur de fragment.

4. Serveur mandataire de fragmentation de pages web selon la revendication 3, dans lequel l'identificateur de fragment comprend un identificateur unique et un numéro de version.

5. Serveur mandataire de fragmentation de pages web selon la revendication 4, dans lequel le processeur (410) est conçu pour comparer les identificateurs uniques et les numéros de version des fragments reçus avec les identificateurs uniques et les numéros de version des fragments sauvegardés.

6. Serveur mandataire de fragmentation de pages web selon la revendication 5, dans lequel la mémoire (420) est conçue pour sauvegarder des fragments reçus lorsque les identificateurs uniques et les numéros de version ne correspondent pas à ceux des fragments sauvegardés.

7. Serveur mandataire de fragmentation de pages web selon l'une quelconque des revendications précédentes, dans lequel le processeur (410) est conçu pour comparer un identificateur unique et un numéro de version reçus du dispositif mobile avec les identificateurs uniques et les numéros de version des fragments reçus, afin d'identifier les fragments que le dispositif mobile ne possède pas, ledit moyen de communication étant conçu pour acheminer des fragments que le dispositif mobile ne possède pas.

8. Serveur mandataire de fragmentation de pages web selon la revendication 2, dans lequel les balises de contenu consistent en un élément quelconque parmi les cadres, les ensembles de cadres, les tables, les formulaires, les objets, les images et/ou les scripts.

9. Serveur mandataire de fragmentation de pages web selon la revendication 8, dans lequel le processeur (410) est conçu pour utiliser chaque balise de contenu parmi les balises de contenu afin de créer un fragment reçu séparé.

10. Serveur mandataire de fragmentation de pages web selon la revendication 9, dans lequel le processeur (410) est conçu pour créer un identificateur unique pour le fragment reçu.

11. Serveur mandataire de fragmentation de pages web selon la revendication 10, dans lequel le processeur (410) est conçu pour comparer le contenu du fragment reçu avec le contenu des fragments de pages web sauvegardés, le processeur étant conçu pour créer un nouveau numéro de version si le contenu du fragment reçu ne correspond pas au contenu des fragments de pages web sauvegardés.

12. Serveur mandataire de fragmentation de pages web selon la revendication 11, dans lequel la mémoire (420) est conçue pour sauvegarder les fragments reçus lorsque les identificateurs uniques et les numéros de version ne correspondent pas à ceux des fragments sauvegardés.

13. Serveur mandataire de fragmentation de pages web selon la revendication 2 et selon l'une quelconque des revendications 8 à 12, dans lequel le processeur (410) compare un identificateur unique et un numéro de version reçus du dispositif mobile avec les identificateurs uniques et les numéros de version des fragments reçus, afin de déterminer les fragments que le dispositif mobile ne possède pas, ledit moyen de communication étant conçu pour acheminer des fragments que le dispositif mobile ne possède pas.

14. Procédé, sur un serveur mandataire de fragmentation de pages web (142) comprenant un processeur (410), un moyen de communication (430) et une mémoire (420), destiné à fournir des fragments nouveaux et mis à jour à un dispositif mobile (120), le dispositif mobile demandant une page web avec une demande qui comprend des identificateurs de fragments pour des fragments de la page web qui sont déjà enregistrés par le dispositif mobile, le procédé comprenant les étapes consistant à :
recevoir depuis l'internet une page web correspondant à la page web demandée par le dispositif mobile ;
fragmenter la page web reçue pour créer des fragments reçus ;
comparer lesdites fragments reçus avec des fragments sauvegardés dans la mémoire, les fragments sans correspondance dans la mémoire constituant des fragments nouveaux ;
sauvegarder les nouveaux fragments ; et
envoyer au dispositif mobile, pour la page web demandée, des fragments sauvegardés qui ont des identificateurs de fragments différents de ceux sauvegardés sur le dispositif mobile.

15. Procédé selon la revendication 14, dans lequel l'étape de fragmentation comprend l'étape consistant à rechercher des balises de fragmentation ou des balises de contenu dans la page web reçue et à fragmenter en fonction des balises de fragmentation ou des balises de contenu.

16. Procédé selon la revendication 15, dans lequel les identificateurs comprennent des identificateurs uniques et des numéros de version, l'étape de comparaison utilisant les identificateurs uniques et les numéros de version au sein des balises de fragmentation pour comparer les fragments reçus avec les identifications de fragments.

17. Procédé selon la revendication 16, comprenant en outre l'étape consistant à sauvegarder les nouveaux fragments, l'étape de sauvegarde consistant à sauvegarder les fragments reçus portant un identificateur unique et un numéro de version qui diffèrent de l'identificateur unique et du numéro de version de tous les fragments sauvegardés.

18. Procédé selon la revendication 15, dans lequel les balises de contenu consistent en un élément quelconque parmi les cadres, les ensembles de cadres, les tables, les formulaires, les objets, les images et/ou les scripts.

19. Procédé selon la revendication 18, dans lequel chaque balise de contenu est utilisée pour créer un fragment reçu.

20. Procédé selon la revendication 19, dans lequel l'étape de comparaison consiste à comparer le contenu du fragment reçu avec les identificateurs de fragments, le contenu des fragments reçus qui ne correspond pas au contenu de fragments sauvegardés identifiant un nouveau fragment.

21. Procédé selon l'une quelconque des revendications 14 à 20, dans lequel l'étape d'envoi comprend en outre les étapes consistant à filtrer les fragments en fonction d'une priorité attribuée aux fragments, l'étape d'envoi n'envoyant que les fragments filtrés.

22. Procédé selon la revendication 21, dans lequel la priorité est attribuée au sein de la page web.

23. Procédé selon la revendication 21, dans lequel la priorité est attribuée en fonction d'un type de balise de contenu.

24. Procédé de navigation sur un dispositif mobile, comprenant les étapes consistant à :
envoyer à un serveur mandataire de fragmentation de pages web par le dispositif mobile une demande de page web avec des identificateurs de fragments pour des fragments sauvegardés sur le dispositif mobile ;
recevoir du serveur mandataire de fragmentation de pages web, par le dispositif mobile, les éventuels fragments nouveaux ou mis à jour ayant des identificateurs de fragments qui diffèrent de ceux qui sont sauvegardés sur le dispositif mobile ; et
rafraîchir l'affichage de la page web sur le dispositif mobile en fonction à la fois des fragments renvoyés et des fragments sauvegardés.

25. Système destiné à fournir une navigation web améliorée à un utilisateur d'un dispositif mobile, comprenant :
un réseau sans fil ;
le dispositif mobile (120), ledit dispositif mobile étant conçu pour communiquer avec le réseau sans fil ; et
un serveur mandataire de fragmentation de pages web (142), destiné à communiquer avec ledit réseau sans fil et à communiquer avec des serveurs web sur l'internet (150), ledit serveur mandataire de fragmentation de pages web étant conçu pour traiter la totalité du trafic web à destination et en provenance dudit dispositif mobile, ledit serveur de fragmentation de pages web possédant :
une mémoire (420) destinée à sauvegarder des fragments de pages web ; et
un processeur (410) conçu pour fragmenter des pages web reçues desdits serveurs web afin de créer des fragments de pages web reçus, le processeur étant en outre conçu pour comparer des fragments de pages web sauvegardés avec ledits fragments de pages web reçus produits par le processeur et pour sauvegarder lesdits fragments de pages web reçus qui sont nouveaux ou mis à jour ;
le dispositif mobile possédant un navigateur conçu pour recevoir des fragments de pages web et pour demander des pages web en utilisant des identificateurs de fragments, ledit serveur mandataire de fragmentation de pages web étant conçu pour envoyer au dispositif mobile des fragments de pages web sauvegardés qui ne sont pas encore sauvegardés sur le dispositif mobile, ce qui est déterminé à l'aide des identificateurs de fragments reçus en provenance du dispositif mobile.

26. Support lisible par ordinateur comprenant du code de programme pouvant être exécuté par un processeur d'un dispositif ou système informatique afin de mettre en oeuvre le procédé selon l'une quelconque des revendications 14 à 23 ou le procédé selon la revendication 24.
